Europäisches Patentamt

**European Patent Office**

Office européen des brevets

(19)

(11) Numéro de publication: **0 187 598**
**B1**

(12)

# FASCICULE DE BREVET EUROPEEN

(45) Date de publication du fascicule du brevet: **09.05.90**

(51) Int. Cl.⁵: **C 03 B 23/025**

(21) Numéro de dépôt: **85402602.8**

(22) Date de dépôt: **23.12.85**

(54) **Installation de four pour le bombage de feuilles de verre.**

(30) Priorité: **29.12.84 DE 3447838**

(43) Date de publication de la demande:
**16.07.86 Bulletin 86/29**

(45) Mention de la délivrance du brevet:
**09.05.90 Bulletin 90/19**

(84) Etats contractants désignés:
**BE CH DE FR GB IT LI SE**

(56) Documents cités:
**FR-A- 403 165**
**FR-A- 408 965**
**FR-A- 596 657**
**FR-A-2 093 982**
**FR-A-2 195 600**
**US-A-2 261 023**

(73) Titulaire: **SAINT-GOBAIN VITRAGE**
**INTERNATIONAL**
**18, avenue d'Alsace**
**F-92400 Courbevoie (FR)**
(84) **BE CH FR GB IT LI SE**

(73) Titulaire: **VEGLA Vereinigte Glaswerke GmbH**
**Viktoriaallee 3-5**
**D-5100 Aachen (DE)**
(84) **DE**

(72) Inventeur: **Roentgen, Paul**
**Talweg 7**
**D-5101 Roetgen/Rott (DE)**
Inventeur: **Nuging, Werner**
**Hermann-Rombaschstrasse 6**
**D-7120 Bietigheim (DE)**
Inventeur: **Krumm, Helmut**
**Lohmühlenstrasse 2**
**D-5100 Aachen (DE)**
Inventeur: **Simons, Hubert**
**Lotsief 20**
**D-5120 Würselen (DE)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

## Description

La présente invention concerne une installation de four pour bomber, sous l'action de la pesanteur, des feuilles de verre posées sur une forme de bombage qui est montée sur un chariot déplaçable, l'installation étant constituée d'au moins une chambre de chauffage, dans laquelle s'effectue le chauffage des feuilles de verre à une température proche de la température de bombage et le refroidissement contrôle des feuilles de verre après le bombage, et d'une chambre de bombage se raccordant à la chambre de chauffage.

Contrairement aux fours de bombage dits continus, dans lesquels des chariots portant des formes de bombage se déplacent dans un seul sens et parcourent une ou plusieurs zones de chauffage, une ou plusieurs zones de bombage, puis une ou plusieurs zones de refroidissement, et qui conviennent pour une fabrication de grandes séries de vitrages bombés à la même forme et de mêmes dimensions, les installations de four du type mentionné plus haut, connues par exemple de US—A—2 261 023, sont utilisées pour la fabrication de vitrages bombés unitaires ou pour la fabrication de petites séries de vitrages. Elles sont utilisées avantageusement lorsque les vitrages successifs exigent chacun un programme de chauffage et de refroidissement différent, ce qui interdit dès lors un passage continu à travers le four à la même cadence que les autres vitrages.

Dans le cas du four de bombage connu du type spécifié plus haute, la chambre de réchauffage et la chambre de bombage sont groupées en une seule unité et sont isolées thermiquement l'une de l'autre par une porte. Le temps de fabrication d'un vitrage dans un tel four de bombage est déterminé par le temps de séjour dans la chambre présentant le temps de travail le plus long. Etant donné que les temps de chauffage et de refroidissement dans la chambre de réchauffage sont normalement plusieurs fois plus longs que le temps de bombage proprement dit dans la chambre de bombage, la capacité de fabrication d'un tel four de bombage connu est relativement faible.

L'invention a pour but d'augmenter la capacité de fabrication d'un four de bombage discontinu conforme à l'invention.

Suivant l'invention, ce but est réalisé par le fait que l'installation de four comporte plusieurs chambres de chauffage qui sont associées à une chambre de bombage, les chambres de chauffage et la chambre de bombage étant montées déplaçables l'une par rapport à l'autre dans les positions respectives autorisant le transport du chariot portant les feuilles de verre d'une chambre à l'autre.

L'invention est basée sur la constatation du fait que, dans le cas du four de bombage connu, la chambre de bombage n'est utilisée que dans une faible proportion de temps et que la capacité de fabrication d'une telle installation est déterminée par le temps de travail de la chambre de chauffage qui, approximativement, est un multiple du temps de travail des chambres de bombage. Etant donné que le cycle de chauffage et le cycle de refroidissement ne peuvent être raccourcis indéfiniment, l'augmentation recherchée de la capacité de fabrication est atteinte conformément à l'invention par le fait que plusieurs chambres de chauffage sont associées à une seule chambre de bombage ou à un nombre plus réduit de chambre de bombage. Ceci a non seulement pour effet de multiplier la capacité de fabrication, mais en outre d'assurer une économie d'énergie sensible car les pertes thermiques dans la chambre de bombage, pendant les temps de travail à vide, sont notablement diminuées par la réduction des temps de fonctionnement à vide.

D'autres particularités et avantages de l'invention ressortiront de la description d'une forme de réalisation préférée d'une installation conforme à l'invention donnée à titre d'exemple avec référence aux dessins annexés, qui représentent:

Figure 1: une vue schématique en plan d'une installation de four conforme à l'invention,

Figure 2: une vue en coupe verticale suivant la ligne II—II de la Figure 1.

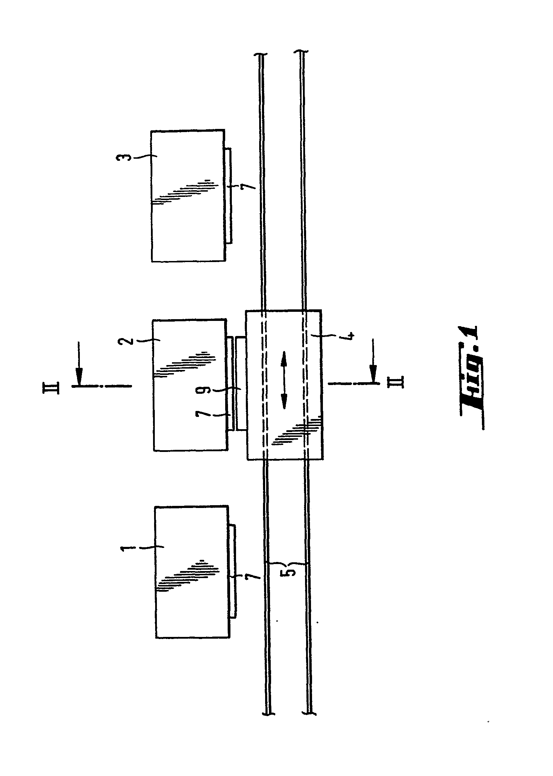

Dans le cas de l'exemple de réalisation représenté sur la figure 1, l'installation de four comprend trois chambres de chauffage 1, 2, 3 et une seule chambre de bombage 4. Les chambres de chauffage 1, 2, 3 sont montées immobiles, c'est-à-dire qu'elles sont fixées au sol. La chambre de bombage 4 est montée sur des roues et peut être déplacée sur des rails 5 le long des chambres de chauffage 1, 2, 3. La chambre de bombage 4 peut être positionnée sur les rails 5 en face de l'une ou l'autre des chambres de chauffage 1, 2, 3. Ces chambres de chauffage 1, 2, 3 sont pourvues, du côté tourné vers les rails 5, d'une ouverture d'enfournement qui peut être fermée par une porte à guillotine 7. De même, la chambre de bombage 4 est pourvue, du côté tourné vers les chambres de chauffage 1, 2, 3 d'une porte à guillotine 9. Lorsque la chambre de bombage 4 et une des chambres de chauffage 1, 2, 3 sont en communication l'une avec l'autre par ouverture des portes 7 et 9, une feuille de verre peut être déplacée d'une chambre dans l'autre.

Selon l'invention, les chambres de chauffage 1, 2, 3 sont en service simultanément, mais leurs cycles de chauffage ou de refroidissement sont avantageusement décalés dans le temps. Dès que, dans une des chambres de chauffage, la feuille de verre a atteint la température souhaitée, inférieure à sa température de bombage proprement dite, la chambre de bombage 4 est amenée devant cette chambre de chauffage et est immobilisée dans cette position. Après ouverture des deux portes 7 et 9, la feuille de verre passe de la chambre de chauffage 1, 2 ou 3 dans la chambre de bombage 4, où un traitement thermique adéquat est pratiqué grâce à des éléments chauffants et où le bombage final de la feuille de verre a lieu. Au terme du bombage de la feuille de verre, la feuille de verre est ramenée dans une des chambres de chauffage dans laquelle est conduit le refroidissement contrôle de la feuille de verre. La chambre de bombage 4 est alors disponible pour l'opération de bombage suivante d'une des feuilles de verre chauffées dans une autre chambre de chauffage. Elle est alors positionnée sur les rails 5 en face de cette chambre de chauffage.

L'installation conforme à l'invention permet de fabriquer l'un à la suite de l'autre des vitrages de formes entièrement différentes les unes des autres, grâce au fait que des programmes de chauffage différents peuvent être établis dans les chambres de chauffage individuelles. En fonction des programmes de chauffage respectifs de ces chambres de chauffage, le programme de bombage ou de chauffage de la chambre de bombage est lui-aussi modifié si nécessaire. Par exemple immédiatement après le positionnement de la chambre de bombage en face d'une chambre de chauffage, le programme de chambre de bombage peut être immédiatement et automatiquement adapté au programme de la chambre de chauffage associée.

Au cas où, lorsque la feuille de verre présente dans une chambre de chauffage a atteint la température souhaitée, la chambre de bombage n'est pas encore disponible, parce que l'opération de bombage précédente n'est pas encore terminée, un pilotage correspondant de la température permet de maintenir la température de la feuille de verre dans la chambre de chauffage en question à la valeur souhaitée jusqu'à ce que la chambre de bombage soit libre, positionnée en face de la chambre de chauffage en question et que la feuille de verre soit reçue par la chambre de bombage.

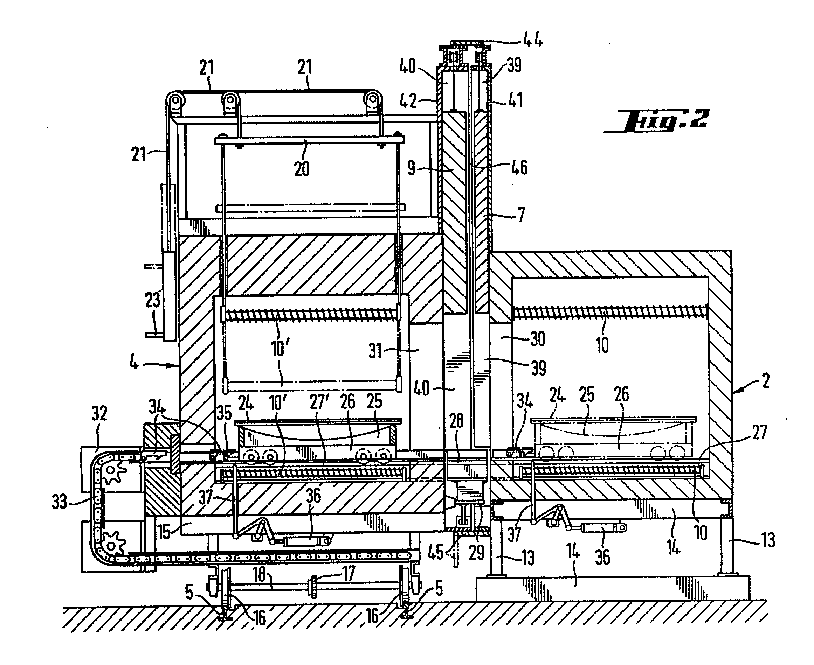

Des détails de la construction apparaîtront clairement sur la figure 2. Alors que les chambres de chauffage 1, 2, 3 sont montées fixes sur un bâti 12, 13, 14, le châssis 15 portant la chambre de bombage 4 peut être déplacé le long des rails 5 sur des roues 16. L'entraînement de la chambre de bombage déplaçable 4 s'effectue au moyen d'une transmission à chaine dont la chaine d'entraînement passe sur la roue dentée 17 calée sur l'arbre 18 portant les roues 16. La commande et le positionnement de la chambre de bombage 4 s'effectuent à l'aide de moyens connus.

Dans la chambre de chauffage 2 sont disposés des éléments chauffants électriques 10.

Dans la chambre de bombage 4 sont également prévus des éléments chauffants électriques, référencés 10'. Dans l'une et l'autre de ces deux chambres, les éléments chauffants dont disposés avantageusement au-dessus et en-dessous des feuilles de verre, et ils peuvent être réglables en hauteur.

Ainsi comme visible à l'intérieur de la chambre 4, le réglage en hauteur est obtenu par montage desdits éléments chauffants sur la traverse basse d'un cadre, dont la traverse haute 20 est à l'extérieur de la chambre et est reliée par l'intermédiaire de cables 21 à des poulies 22 manoeuvrables par une poignée 23.

Les feuilles de verre 24 à bomber, qui sont constituées par exemple de plusieurs épaisseurs de verre superposées qui doivent être associées en un vitrage feuilleté bombé, sont disposées sur la forme de bombage 25 montée sur un chariot déplaçable 26. Le chariot 26 roule sur des rails 27, 27' qui sont fixés dans la chambre de chauffage 2 ou dans la chambre de bombage 4. La continuité des rails 27 dans la chambre de chauffage 2 avec les rails 27' dans la chambre de bombage 4 est assurée par des pièces de transition 28 qui peuvent pivoter chacune autour d'un axe de pivotement 29. Le mouvement de pivotement de ces pièces de transition 28 s'effectue dès que les portes 7 et 9 s'ouvrent. Avant la fermeture des ouvertures d'enfournement 30 et 31 au moyen des portes 7 et 9, les pièces de transition 28 sont ramenées dans une position basse. Les déplacements des portes 7 et 9 et les mouvements de pivotement des pièces de transition 28 peuvent être synchronisés.

Un mécanisme d'entraînement constitué d'un moteur d'entraînement 32 et d'une chaine 33 entraînée par ce moteur est prévu pour transporter le chariot 26 de la chambre de chauffage 2 dans la chambre de bombage 4 et inversement. La chaine 33 est une chaine qui bien que flexible, peut être sollicitée aussi bien en traction qu'en poussée. A son extrémité, la chaine 33 est pourvue d'un maillon de couplage 34 qui vient en prise sur un crochet 35 prévu sur le chariot 26. Un vérin, par exemple pneumatique 36 sert à libérer l'accouplement en faisant pivoter le maillon 34 vers le haut par l'intermédiaire d'une tige 37 de sorte que la chaine 33 est ainsi détachée du chariot 26 et peut être ramenée dans une position de repos.

Pour éviter une déperdition thermique incontrôlée par l'interstice inévitablement présent entre les deux chambres lorsque les portes sont ouvertes, la chambre de chauffage et la chambre de bombage sont pourvues chacune, du côté de l'enfournement, d'un cadre 39, 40 entourant la porte levante. Ces cadres 39, 40 sont reliés de manière étanche à leur chambre par une paroi 41, 42; des volets d'étanchéité pivotants 44, 45 sont montés sur les quatre faces de la périphérie du cadre 40. Dès que les deux chambres 2, 4 ont atteint leur position relative finale, les volets d'étanchéité 44, 45 pivotent en position d'appui sur le cadre 39. L'interstice 46 existant entre les cadres 39 et 40 est de cette façon obturé. Ce n'est qu'après l'obturation totale de l'interstice 46 par les volets 44, 45 que les portes 7 et 9 sont ouvertes. On évite ainsi un refroidissement indésirable dû à l'échappement de l'air chaud par l'interstice 46 et à l'entrée d'air froid dans la chambre de bombage et/ou dans la chambre de chauffage liée à cet échappement.

Lorsque le chariot 26 portant les feuille de verre 24 se trouve dans la chambre de bombage 4, intervient le programme de chauffage dans la chambre de bombage commandé par ordinateur, étant entendu que ce programme est fonction du programme de chauffage qui a eu lieu dans le chambre de chauffage, programme dans la chambre de chauffage également commandé par ordinateur. Au terme du processus de bombage, l'empilement de feuilles de verre bombé 24 est ramené dans la chambre 2 par action de la chaine 33. Dans la chambre de chauffage 2 se déroule le refroidissement des feuilles de verre selon une courbe de refroidissement préétablie, avantageusement aussi sous la commande d'un programme. Dès que le chariot 26 avec l'empilement de feuilles de verre 24 se retrouve dans la chambre de chauffage 2 et que la chaine 33 a libéré les ouvertures d'enfournement, les portes 7 et 9 redescendent et ferment les deux chambres. La chambre de bombage 4 se déplace alors devant une autre chambre de chauffage et l'opération décrite se répète.

Après le refroidissement des feuilles de verre à l'intérieur de la chambre 2, le chariot 26 avec l'empilement de feuilles de verre bombé est enlevé par l'ouverture d'enfournement 30 et la chambre de chauffage 2 est rechargée.

## Revendications

1. Installation de four pour bomber, sous l'action de la pesanteur, des feuilles de verre (24) posées sur une forme de bombage (25) qui est montée sur un chariot déplaçable (26), l'installation étant constituée d'une chambre de chauffage dans laquelle s'effectue le chauffage contrôle des feuilles de verre à une température proche de la température de bombage et le refroidissement contrôlé des feuilles de verre après leur bombage, et d'une chambre de bombage (4) se raccordant à la chambre de chauffage, caractérisée en ce qu'elle comporte plusieurs chambres de chauffage (1, 2, 3) qui sont associées à une chambre de bombage (4), étant entendu que les chambres de chauffage et la chambre de bombage sont disposées de manière à pouvoir être déplacées l'une par rapport à l'autre et peuvent être fixées l'une par rapport à l'autre dans des positions telles que le transfert du chariot (26) portant les feuilles de verre d'une chambre à l'autre est possible.

2. Installation de four suivant la revendication 1, caractérisée en ce que les chambres de chauffage (1, 2, 3) sont montées fixes et la chambre de bombage (4) est déplaçable le long des chambres de chauffage (1, 2, 3).

3. Installation de four suivant les revendications 1 et 2, caractérisée en ce qu'elle comporte trois chambres de chauffage fixes (1, 2, 3) et une chambre de bombage (4).

4. Installation de four suivant l'une quelconque des revendications 1 à 3, caractérisée en ce que les ouvertures d'enfournement (30, 31) des chambres (2, 4) peuvent être fermées par des portes (7, 9) qui sont montées dans un cadre (39, 40) relié de manière étanche à la chambre correspondante par une paroi (41, 42).

5. Installation de four suivant la revendication 4, caractérisée en ce que l'interstice (46) subsistant entre les cadres (39, 40) est obturé de manière étanche par des volets d'étanchéité (44, 45).

6. Installation de four suivant l'une quelconque des revendications 1 à 5, caractérisée en ce que des rails (27, 27') pour le transport du chariot (26) portant les feuilles de verre (24) peuvent être raccordés l'un à l'autre par une pièce de transition pivotante (28).

7. Installation de four suivant l'une quelconque des revendications 1 à 6, caractérisée en ce que le système de transport destiné à déplacer le chariot (26) portant les feuilles de verre (24) comporte une chaine flexible (33) qui peut être sollicitée en traction et en poussée et qui peut être couplée au chariot (26).

8. Installation de four suivant l'une quelconque des revendications 1 à 7, caractérisée en ce que les programmes de chauffage et de refroidissement dans les chambres de chauffage (1, 2, 3) peuvent être réglés indépendamment l'un de l'autre.

9. Installation de four suivant l'une quelconque des revendications 1 à 8, caractérisée en ce que les programmes de chauffage dans la chambre de bombage (4) sont fonction des programmes de chauffage dans les chambres de chauffage individuelles (1, 2, 3).

## Patentansprüche

1. Ofenanlage zum Biegen von auf einer auf einem verfahrbaren Wagen (26) angeordneten Biegeform (25) aufliegenden Glasscheiben (24) unter der Wirkung der Schwerkraft, bestehend aus einer Temperkammer zum gesteuerten Erwärmen der Glasscheiben auf eine Temperatur nahe der Biegetemperatur und zum gesteuerten Abkühlen der Glasscheiben nach dem Biegen, und einer an die Temperkammer anschließenden Biegekammer (4), dadurch gekennzeichnet, daß sie mehrere Temperkammern (1, 2, 3) umfaßt, die einer Biegekammer (4) zugeordnet sind, wobei die Temperkammern und die Biegekammer relativ zueinander verfahrbar angeordnet und in den jeweiligen Positionen, in denen der Transport des die Glasscheiben tragenden Wagens (26) von der einen in die andere Kammer erfolgt, relativ zueinander festlegbar sind.

2. Ofenanlage nach Anspruch 1, dadurch gekennzeichnet, daß die Temperkammern (1, 2, 3) fest angeordnet sind, und daß die Biegekammer (4) entlang den Temperkammern (1, 2, 3) verfahrbar ist.

3. Ofenanlage nach Anspruch 1 und 2, dadurch gekennzeichnet, daß sie drei fest angeordnete Temperkammern (1, 2, 3) und eine Biegekammer (4) umfaßt.

4. Ofenanlage nach einem der Ansprüche 1 bis 3, dadurch gekennzeichnet, daß die Beschickungsöffnungen (30, 31) der Kammern (2, 4) durch Türen (7, 9) verschließbar sind, die jeweils in einem Rahmen (39, 40) gelagert sind, der mit der jeweiligen Kammer durch eine Wand (41, 42) dicht verbunden ist.

5. Ofenanlage nach Anspruch 4, dadurch gekennzeichnet, daß der zwischen den Rahmen (39, 40) verbleibende Spalt (46) durch Dichtklappen (44, 45) abdichtbar ist.

6. Ofenanlage nach einem der Ansprüche 1 bis 5, dadurch gekennzeichnet, daß die Schienen (27, 27') für den Transport des die Glasscheiben (24) tragenden Wagens (26) durch ein verschwenkbares Übergangsstück (28) miteinander verbindbar sind.

7. Ofenanlage nach einem der Ansprüche 1 bis 6, dadurch gekennzeichnet, daß das Transportsystem zum Verschieben des die Glasscheiben (24) tragenden Wagens (26) eine auf Zug und auf Schub belastbare flexible Schubkette (33) umfaßt, die an den Wagen (26) ankuppelbar ist.

8. Ofenanlage nach einem der Ansprüche 1 bis 7, dadurch gekennzeichnet, daß die Aufheiz- und Abkühlprogramme in den Temperkammern (1, 2, 3) unabhängig voneinander einstellbar sind.

9. Ofenanlage nach einem der Ansprüche 1 bis 8, dadurch gekennzeichnet, daß die Heizprogramme in der Biegekammer (4) von den Heizprogrammen in den einzelnen Temperkammern (1, 2, 3) entsprechend abhängig sind.

## Claims

1. Furnace installation for curving, under the effect of gravity, glass sheets (24) placed on a curving mould (25) which is mounted on a movable carriage (26), the installation being composed of a heating chamber in which the controlled heating of the glass sheets to a temperature close to the curving temperature and the controlled cooling of the glass sheets after curving are carried out, and of a curving chamber (4), connected to the heating chamber, characterized in that the installation comprises several heating chambers (1, 2, 3), which are associated with one curving chamber (4), it being understood that the heating chambers and the curving chamber are disposed in such a way that they can be displaced the one relative to the other and can be fixed the one relative to the other in positions such that the transfer of the carriage (26) carrying the glass sheets from one chamber to the other is possible.

2. Furnace installation according to Claim 1, characterized in that the heating chambers (1, 2, 3) are mounted fixed and the curving chamber (4) is displaceable along the heating chambers (1, 2, 3).

3. Furnace installation according to Claims 1 and 2, characterized in that it comprises three fixed heating chambers (1, 2, 3) and one curving chamber (4).

4. Furnace installation according to any one of Claims 1 to 3, characterized in that the charging openings (30, 31) of the chambers (2, 4) can be closed by doors (7, 9) which are mounted in a frame (39, 40) connected in sealed manner to the corresponding chamber by a wall (41, 42).

5. Furnace installation according to Claim 4, characterized in that the gap (46) existing between the frames (39, 40) is closed in sealed manner by sealing shutters (44, 45).

6. Furnace installation according to any one of Claims 1 to 5, characterized in that rails (27, 27') for the transporting of the carriage (26) carrying the glass sheets (24) can be connected to one another by a pivoting transition piece (28).

7. Furnace installation according to any one of Claims 1 to 6, characterized in that the transporting system intended for moving the carriage (26) carrying the glass sheets (24) comprises a flexible chain (33), which can be loaded in tension and in thrust and which can be coupled to the carriage (26).

8. Furnace installation according to any one of Claims 1 to 7, characterized in that the heating and cooling programmes in the heating chambers (1, 2, 3) can be regulated independently of one another.

9. Furnace installation according to any one of Claims 1 to 8, characterized in that the heating programmes in the curving chamber (4) are a function of the heating programmes in the individual heating chambers (1, 2, 3).

Fig.1

EP 0 187 598 B1

Fig.2